# EUROPÄISCHE PATENTANMELDUNG

(11) **EP 2 357 122 A1**
(43) Veröffentlichungstag der Anmeldung: **17.08.2011**
(21) Anmeldenummer: 10075070.2
(22) Anmeldetag: 17.02.2010
(51) Int. Cl.: B62D 55/00, B60P 3/06

(54) **Kupplungsadapter zum Verbinden von Transportsystemen für schwere Lasten**

(71) Anmelder: F.W. Grundt Logistik + Spedition GmbH & Co. KG, 13509 Berlin (DE)
(72) Erfinder: Schröter, Johannes, 13595 Berlin (DE)
(74) Vertreter: Pfenning, Meinig & Partner GbR

(57) **Zusammenfassung**

Die Erfindung betrifft einen Kupplungsadapter (1) zum Verbinden von Transportsystemen (17, 18, 29) für schwere Lasten, wobei der Kupplungsadapter (1) ein Basiselement (3) mit einer Vorderseite (2) aufweist, an der mindestens eines der folgenden Kupplungselemente angeordnet ist:
- ein Kupplungsarm (4) zum Einführen in ein Kupplungsmaul (24),
- ein Kupplungsmaul (24) zum Aufnehmen eines Kupplungsarms (4),
und dass an mindestens einer weiteren Seite des Basiselements (3), insbesondere an einer der Vorderseite (2) abgewandten Rückseite (11) des Basiselements (2) oder an einer Oberseite (6) des Basiselements, mindestens eines der folgenden weiteren Kupplungselemente angeordnet ist:
- ein weiterer Kupplungsarm (4) zum Einführen in ein Kupplungsmaul (24),
- ein weiteres Kupplungsmaul (24) zum Aufnehmen eines Kupplungsarms (4),
- eine Bolzenlaschenkupplung (12),
- eine Schwerlastöse bzw. ein Schwerlasthaken (7) und/oder ein
- Twistlockelement.

## Beschreibung

Die Erfindung betrifft einen Kupplungsadapter zum Verbinden von Transportsystemen für schwere Lasten.

Für den Transport schwerer Lasten, also Güter mit einem Gewicht von 10 Tonnen oder mehr, werden unterschiedliche Transportsysteme eingesetzt. In der Regel wird die Last auf eine schwerlastfähige Ladeplattform mit oder ohne eigene Radachsen gehoben, wie beispielsweise ein sogenanntes Flatrack, ein Cargo-Trailer, ein mehrachsiges Fahrwerk oder ein schienen-oder straßentauglicher Anhänger bzw. Güterwagen, und anschließend auf dieser Ladeplattform gesichert. Diese Ladeplattform wird mit einem Fahrzeug mit eigenem Antrieb verbunden, beispielsweise mit einem Flurförderzeug wie einem Gabel- oder Schwerlaststapler auf Werkgeländen, einem Sattelschlepper, einer Zugmaschine, einem RORO-Traktor, einer Hafenzugmaschinen, einem stationären oder fahrbaren Kran oder einem spur-oder schienengebundenen Triebfahrzeug.

Entlang eines Transportweges der Last muss dieser in der Regel mehrmals von einer Ladeplattform auf eine andere Ladeplattform verladen werden. Dazu muss die Last von einer ersten Ladeplattform entsichert und angehoben, auf einer zweiten Ladeplattform platziert und auf dieser neu gesichert werden, wodurch sich die Dauer und die Kosten eines solchen Schwerlasttransports erhöhen. Außerdem besteht bei einer solchen Umladung immer ein Risiko einer Beschädigung des Transportgutes (der Last) oder eines der eingesetzten Transportsysteme, also beispielsweise einer der oben genannten Ladeplattformen oder eines der oben genann-ten Fahrzeuge oder Hebemaschinen.

Es ist daher die Aufgabe der vorliegenden Erfindung, eine Lösung der beschriebenen Schwierigkeiten vorzuschlagen. Die Erfindung soll es also ermöglichen, den Transport einer schweren Last zu beschleunigen und zu verbilligen und gleichzeitig das Risiko einer Beschädigung der Last oder eines der eingesetzten Transportsysteme zu reduzieren.

Diese Aufgabe wird erfindungsgemäß gelöst durch einen Kupplungsadapter zum Verbinden von Transportsystemen für schwere Lasten gemäß dem Hauptanspruch. Weiterentwicklungen ergeben sich mit den Unteransprüchen.

Bei einem erfindungsgemäßen Kupplungsadapter zum Verbinden von Transportsystemen für schwere Lasten ist also vorgesehen, dass der Kupplungsadapter ein Basiselement mit einer Vorderseite aufweist, an der mindestens eines der folgenden Kupplungselemente angeordnet ist:
- ein Kupplungsarm zum Einführen in ein Kupplungsmaul,
- ein Kupplungsmaul zum Aufnehmen eines Kupplungsarms und dass an mindestens einer weiteren Seite des Basiselements, insbesondere an einer der Vorderseite abgewandten Rückseite des Basiselements, an einer Oberseite des Basiselements oder an einer Unterseite des Basiselements, mindestens eines der folgenden weiteren Kupplungselemente angeordnet ist:
- ein weiterer Kupplungsarm zum Einführen in ein Kupplungsmaul,
- ein weiteres Kupplungsmaul zum Aufnehmen eines Kupplungsarms,
- eine Bolzenlaschenkupplung,
- eine Schwerlastöse bzw_{.} ein Schwerlasthaken und/oder
- ein Twistlockelement.

Im Fall, dass an der Vorderseite des Basiselements des erfindungsgemäßen Kupplungsadapters ein Kupplungsarm angeordnet ist, hat der Kupplungsadapter die Eignung, ein Transportsystem wie etwa eine Ladeplattform, die an einer Vorderseite oder an einer Rückseite ein Kupplungsmaul zum Aufnehmen dieses Kupplungsarms aufweist, mit unterschiedlichen Fahrzeugen, ggf. unterschiedlicher Hersteller, mit oder ohne eigenen Antrieb zu verbinden, d.h. an diese anzukuppeln. Zu diesem Zweck weist der Kupplungsadapter an einer weiteren Seite des Basiselements mindestens eines der oben genannten weiteren Kupplungselemente auf. Neben einer Verbilligung und Beschleunigung wird durch den Kupplungsadapter auch eine größere Flexibilität beim Einsatz von Transportsystem unterschiedlicher Hersteller erreicht, da mit Hilfe des Transportsystems eine Kompatibilität zu unterschiedlichen Transportsystemen verschiedener Hersteller erzeugt werden kann, insbesondere zwischen Transportsystemen der Hersteller Mafi, Scheuerle, Goldhofer und Kalmar. Reduzierung von Kosten und

Ladeplattformen mit Kupplungsmäulern zur Aufnahme eines Kupplungsarms, insbesondere eines sogenannten Schwanenhalses, sind aus der Druckschrift DT 1 297 999 bekannt und als Transportsysteme für schwere Lasten weit verbreitet. Typischerweise werden sie mit Hilfe von Zugmaschinen oder Gabelstaplern mit einem entsprechenden Schwanenhalsaufsatz angekuppelt und bewegt. Die in der genannten Druckschrift gezeigten Ladeplattformen sind als fahrbare Ladegestelle mit Radachsen ausgeführt. Möglich sind natürlich auch entsprechende nicht-fahrbare Ausführungsformen dieser Ladegestelle ohne Radachsen. Entsprechend ist es prinzipiell auch möglich, ein Flatrack an einer Vorderseite oder an einer Rückseite (oder an der Vorder-und der Rückseite) des Flatracks mit solchen Kupplungsmäulern auszustatten.

Die Kupplung zweier Transportsysteme über einen Kupplungsarm und ein Kupplungsmaul hat sich in der Praxis als sehr vorteilhaft erweisen, da sie sich schnell und problemlos herstellen und wieder lösen lässt, sehr sicher und für schwere Lasten geeignet ist.

Je nach konkreter Ausgestaltung des weiteren Kupplungselements lässt sich eine Kupplung der Ladeplattform mit unterschiedlichen Transportsystemen durchführen. Somit ist es also vorteilhafterweise möglich, eine auf der Ladeplattform befindliche Last mit verschiedenen Fahrzeugen zu bewegen, deren Kupplungssysteme sich voneinander unterscheiden, ohne die Last auf eine andere Ladeplattform umsetzen zu müssen. Es muss in diesem Fall lediglich der Kupplungsadapter gegen einen anderen Kupplungsadapter ausgetauscht werden, dessen weiteres Kupplungselement, beispielsweise an der Rückseite des Basiselements, zu dem Kupplungssystem des eingesetzten Fahrzeugs passt, etwa eine Bolzenlaschenkupplung, ein weiterer Kupplungsarm oder Twistlockelemente an der Rückseite des Basiselements des Kupplungsadapters. Es ist auch möglich, dass an der Oberseite des Basiselements Kupplungselemente, wie etwa eine Schwerlastöse angeordnet ist. Auf diese Weise lässt sich die Ladeplattform (allgemein das Transportsystem) etwa mit einem Kran aufnehmen und heben. In einer Ausführung des erfindungsgemäßen Kupplungsadapters ist an der Vorderseite und an der Rückseite des Kupplungsadapters jeweils ein Kupplungsarm oder jeweils ein Kupplungsmaul vor-gesehen. Im ersten Fall lässt sich der Kupplungsadapter beispielsweise zum Verbinden zweier der oben beschriebenen Ladeplattformen verwenden. Im zweiten Fall lässt sich der Kupplungsadapter zum Verbinden zweier Kupplungsarme einsetzen, die etwa an zwei Fahrwerken angebracht sind. Dabei können diese beiden Kupplungsarme ihrerseits natürlich ebenfalls Teile eines Kupplungsadapters hier beschriebener Art sein. Es ist also möglich, bei Bedarf mehrere der erfindungsgemäßen Kupplungsadapter miteinander zu verbinden, sie also gewissermaßen hintereinander zu schalten, wodurch sich die Flexibilität der eingesetzten Transportsystem noch weiter erhöhen lässt.

Üblicherweise haben die eingesetzten Kupplungsarme ein Länge in einem Bereich zwischen etwa 0,3 m bis 1,0 m. In einer Ausführungsform des Kupplungsadapters ist daher vorgesehen, dass ein Kupplungsarm des Kupplungsadapters ein Länge in einem Bereich zwischen etwa 0,3 m bis 1,0 m aufweist oder dass ein Kupplungsmaul des Kupplungsadapters eine Tiefe in einem Bereich zwischen etwa 0,3 m bis 1,0 m aufweist.

In einer weiteren Ausführungsform ist vorgesehen, dass an einer linken Seitenfläche und an einer rechten Seitenfläche des Basiselements jeweils mindestens ein Seitenarm angeordnet ist zum Kontaktieren von Seitenflächen einer mit dem Kupplungsadapter verbundenen Ladeplattform (oder anderen Transportsystem). Auf diese Weise lassen sich die Stabilität und eine zulässige Höchstlast des Kupplungsadapters erhöhen. Dies wird in einer Weiterentwicklung noch weiter gesteigert, in der an Innenflächen der Seitenarme Twistlockelemente angeordnet sind, welche mit entsprechenden Twistlockelementen an einer Ladeplattform verbindbar sind.

In einer Ausführungsform ist vorgesehen, dass, falls kein Kupplungsmaul vorgesehen ist, eine Länge des Basiselements zwischen etwa 5cm und 50cm beträgt, und falls zwei Kupplungsmäuler vorgesehen sind, die Länge des Basiselements zwischen etwa 0,8m und 2m beträgt. Dabei ist die Länge des Basiselements als Abstand zwischen der Vorderseite und der Rückseite des Basiselements definiert. Auf diese Weise lässt sich im Fall, dass zwei Fahrwerke miteinander verkoppelt werden, ein Achsabstand auf etwa 1,4 m bis 1,7 m einstellen.

Durch eine Einstellung der relativen vertikalen Anordnung der Kupplungselemente auf der Vorderseite und der Rückseite des Basiselements lassen sich Höhenunterschiede zwischen miteinander verbundenen Transportsystemen, insbesondere Ladeplattformen oder Fahrwerke, gezielt einstellen. So lässt sich beispielsweise eine Höhe eines Zwischenraums zwischen einer Ladeplattform und einem Untergrund (bspw. einer Straße) an örtliche Gegebenheiten oder Verkehrsvorschriften gezielt anpassen. Es läst sich auf diese Weise auch ein erstes Fahrwerk gegenüber einem zweiten, mit dem ersten über den Kupplungsadapter verbundenen Fahrwerk anheben, so dass beispielsweise eine oder mehrere Radachsen des zweiten Fahrwerks keinen Bodenkontakt besitzen.

In einem Ausführungsbeispiel ist vorgesehen, dass das Basiselement mindestens eine Durchgangsöffnung aufweist welche das Basiselement von der Vorderseite bis zur Rückseite durchläuft, zum Hindurchführen eins Stützarms einer Ladeplattform oder eines anderen Transportsystems durch die Durchgangsöffnung. Auf diese Weise lässt sich eine Verbindung zwischen dem Kupplungsadapter und dem Transportsystem wesentlich erhöhen.

In einem weiteren Ausführungsbeispiel ist vorgesehen, dass das Basiselement einen Kupplungsarm aufweist, der höhenverstellbar an dem Basiselement befestigt ist. Auf diese Weise lassen sich Höhenunterschiede zwischen miteinander verbundenen Transportsystemen, insbesondere Ladeplattformen oder Fahrwerke, gezielt einstellen, womit die weiter oben beschriebenen Vorteile erzielt werden können. Eine entsprechende Höhenverstellbarkeit lässt sich beispielsweise dadurch erzielen, dass eine Zwischenplatte vorgesehen ist mit einer den Kupplungsarm tragenden Vorderseite und einer der Vorderseite abgewandten Rückseite, welche über Verbindungselemente mit der Vorderseite des Basiselements höhenverstellbar verbunden ist. Vorzugsweise sind in der Zwischenplatte und in dem Basiselement Bohrungen auf unterschiedlichen Höhen vorgesehen, die mittels stiftförmiger oder bolzenförmiger Verbindungselemente auf verschiedenen Höhen verbunden werden können. Falls in der Basisplatte Durchgangsöffnungen vorgesehen sind zum Hindurchführen von Stützarmen einer Ladeplattform oder eines anderen Transportsystems, dann sind ggf. an Zwischenplatte entsprechende Durchgangsöffnungen angeordnet. In der Regel sind die Durchgangsöffnung im Basiselement mit einer größeren Höhe erforderlich, um ein Hindurchführen der Stützarme bei unterschiedlichen Höheneinstellungen der Zwischenplatte relativ zum Basiselement zu ermöglichen.

In einer Ausführungsform ist vorgesehen, dass an der Vorderseite des Basiselements ein erster Kupplungsarm und an der Rückseite des Basiselements ein zweiter Kupplungsarm vorgesehen sind, wobei der erste Kupplungsarm relativ zum zweiten Kupplungsarm vertikal versetzt angeordnet sein kann. In einem weiteren Ausführungsbeispiel ist an der Vorderseite des Basiselements ein erstes Kupplungsmaul und an der Rückseite des Basiselements ein zweites Kupplungsmaul vorgesehen, wobei das erste Kupplungsmaul wiederum relativ zum zweiten Kupplungsmaul vertikal versetzt angeordnet ist. Auf diese Weise lassen sich die genannten Kupplungsmäuler in einem Inneren des Basiselements aneinander vorbeiführen. Dies kann beispielsweise der Erzielung eines vorgegebenen Achsabstandes zweier miteinander verbundener Fahrwerke dienen.

In einer Weiterentwicklung ist vorgesehen, dass eine Breite der Vorderseite des Basiselements und/oder eine Breite der Rückseite des Basiselements in einem Bereich zwischen 1,5m und 2,8m liegen. Auf diese lassen sich die genannten Seiten etwa an eine Breite einer Ladeplattform (oder allgemein eines Transportsystems) anpassen, um eine möglichst große Kontaktfläche zwischen dem Kupplungsadapter und der Ladeplattform zu erzielen für eine möglichst stabile Kupplung.

Für eine möglichst stabile Kupplung ist in einer Ausführungsform ferner vorgesehen, dass an der Vorderseite und/oder an der Rückseite des Basiselements Twistlockelemente angeordnet sind, welche mit entsprechend korrespondierenden Twistlockelementen an einem Transportsystem verbindbar sind. In einer Weiterentwicklung ist vorgesehen, dass das Basiselement einen Kupplungsarm aufweist, an dem mindestens ein ausfahrbarer Sicherungsbolzen angeordnet ist zum Sichern oder Verriegeln des Kupplungsarms innerhalb eines Kupplungsmauls. Zusätzlich oder alternativ herzu kann an dem genannten Kupplungsarm mindestens eine Ausbuchtung oder mindestens eine Einbuchtung angeordnet sein zum Sichern des Kupplungsarms innerhalb eines Kupplungsmauls.

Im Folgenden wird die Erfindung anhand einiger spezieller Ausführungsbeispiele, welche in den nachfolgenden Figuren 1 bis 12 schematisch dargestellt sind, näher erläutert. Es zeigt:
- Figur 1:: einen Kupplungsadapter hier vorgeschlagener Art in eine Ansicht von vorne,
- Figur 2:: einen Kupplungsadapter hier vorgeschlagener Art in einer Seitenansicht,
- Figur 3:: einen Kupplungsadapter hier vorgeschlagener Art in einer Ansicht von oben,
- Figur 4:: einen Querschnitt (I) durch einen Kupplungsadapter hier vorgeschlagener Art gemäß Figur 1,
- Figur 5:: einen Kupplungsadapter hier vorgeschlagener Art mit einem höhenver-

- Figur 6:: stellbaren Kupplungsarm in einer Seitenansicht, Zwischenplatte des in Figur 5 gezeigten Kupplungsadapters in einer Ansicht von hinten,
- Figur 7:: Kupplungsadapter gemäß Figur 5 in einen Ansicht von hinten,
- Figur 8:: Kupplungsadapter hier vorgeschlagener Art mit zwei Kupplungsarmen in einer Seitenansicht,
- Figur 9:: eine Ladeplattform, verbunden mit einem Fahrwerk durch einen Kupplungsadapter hier vorgeschlagener Art mit zwei Seitenarmen,
- Figur 10:: einen Querschnitt durch den in Figur 8 gezeigten Kupplungsadapter,
- Figur 11:: Querschnitt durch eine Ladeplattform, verbunden mit einem Kran über zwei Kupplungsadapter hier vorgeschlagener Art und
- Figur 12:: Querschnitt durch zwei Fahrwerke, miteinander gekuppelt durch drei miteinander verbundene Kupplungsadapter hier vorgeschlagener Art.

Die Nummerierung der Bezugszeichen wurde in den Figuren durchweg beibehalten. Gleiche Bezugszeichen beziehen sich also jeweils auf gleiche Merkmale.

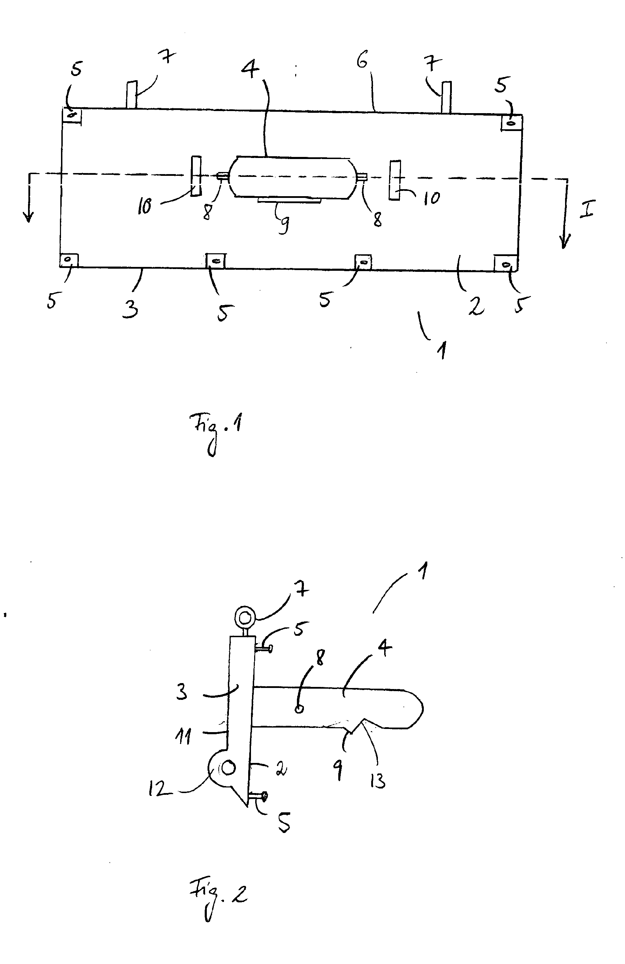

Figur 1 zeigt einen Kupplungsadapter 1 hier vorgeschlagener Art in einer Ansicht von vorne, bei dem an einer Vorderseite 2 eines Basiselements 3 des Kupplungsadapters 1 ein Kupplungsarm 4 angeordnet ist zum Einführen in ein Kupplungsmaul.

Ferner sind an der Vorderseite 2 des Basiselements 3

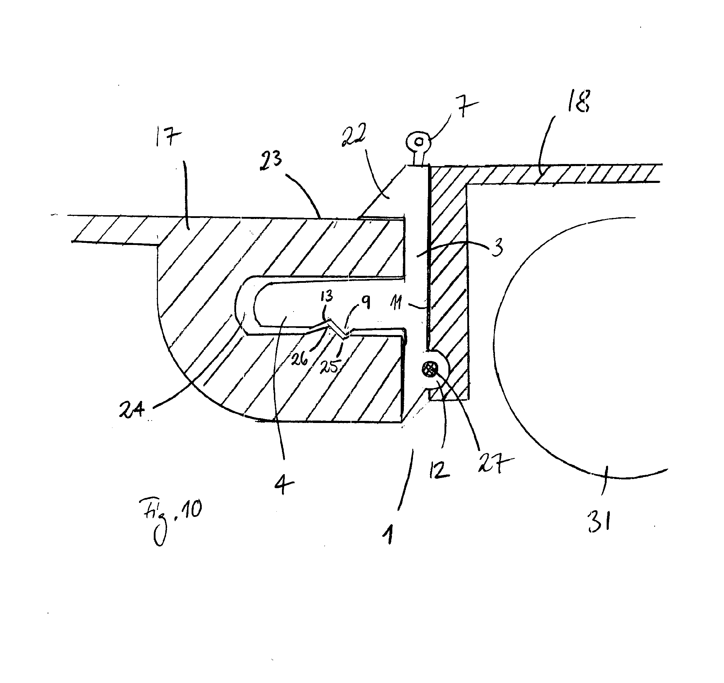

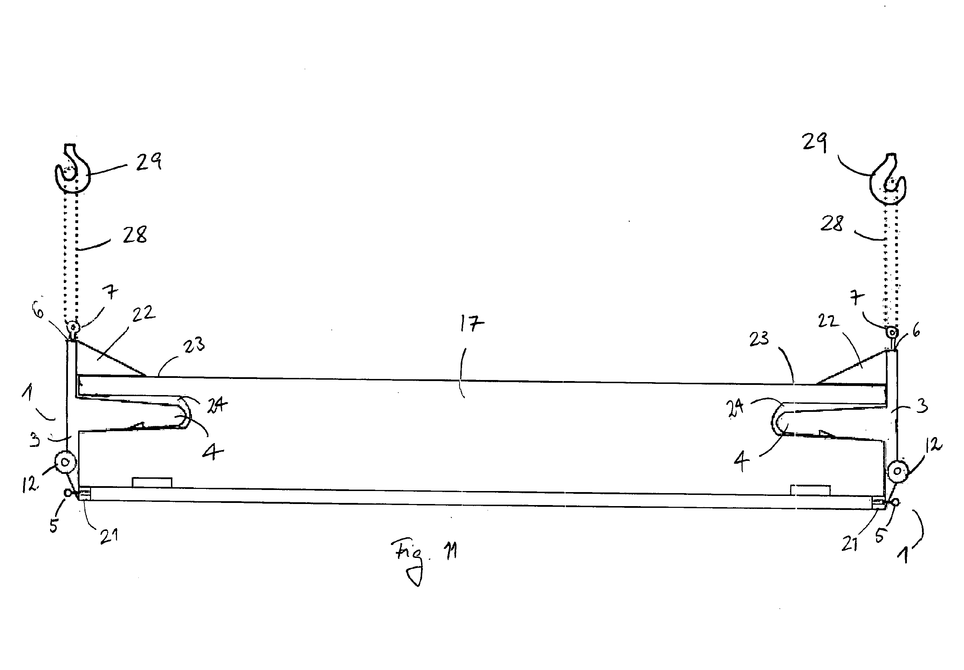

Twistlockelemente 5 angeordnet zum Sichern und Stabilisieren einer mittels des Kupplungsarms 4 hergestellten Verbindung mit einer Ladeplattform oder einem anderen Transportsystem mit korrespondierenden Twistlockelementen, vgl. Figuren 10 und 11.

An einer Oberseite 6 des Kupplungsadapters 1 sind zwei Schwerlastösen 8 angeordnet, mit denen der Kupplungsadapter 1 aufgenommen und angehoben werden kann, bspw. mittels eines Krans, vgl. Figur 11.

An dem Kupplungsarm sind zwei hydraulisch ausfahrbare Sicherungsbolzen 8 zu erkennen sowie eine Ausbuchtung 9 an einer Unterseite des Kupplungsarms zur Sicherung des Kupplungsarms innerhalb eines Kupplungsmauls.

Schließlich sind seitlich neben dem Kupplungsarm zwei Durchgangsöffnungen 10 vorgesehen zum Hindurchführen von Stützarmen eines mit dem Kupplungsadapter 1 verbundenen Transportsystems durch den Kupplungsadapter 1.

In Figur 2 ist der in Figur 1 gezeigte Kupplungsadapter in einer Seitenansicht dargestellt. Zu erkennen sind insbesondere eine an einer Rückseite 11 des Basiselements 3 angeordnete Bolzenlaschenkupplung 12, sowie eine Einbuchtung an dem Kupplungsarm 4.

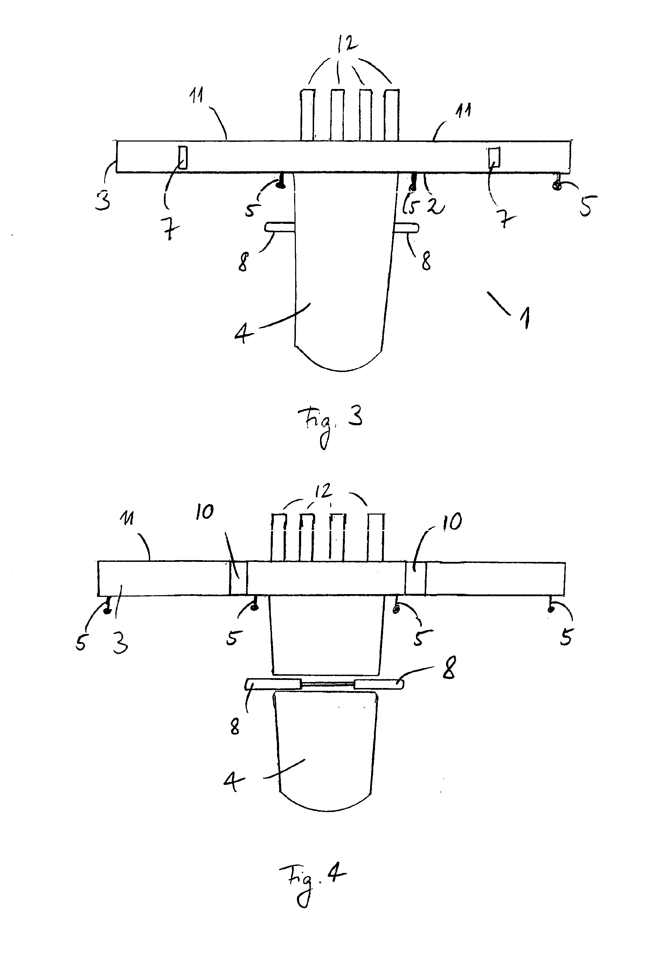

In Figur 3 ist der in Figur 1 gezeigte Kupplungsadapter 1 in einer Ansicht von oben dargestellt. In Figur 4 ist einer Querschnitt (I) gemäß Figur 1 durch diesen Kupplungsadapter 1 dargestellt. Zu erkennen sind insbesondere die an einer Rückseite 11 des Basiselements 3 angeordnete Bolzenlaschenkupplung 12, sowie die aus dem Kupplungsarm 4 hydraulisch ausgefahrenen seitlichen Sicherungsbolzen 8. Ferner sind in der Figur 4 die Durchgangsöffnungen 10 zu erkennen.

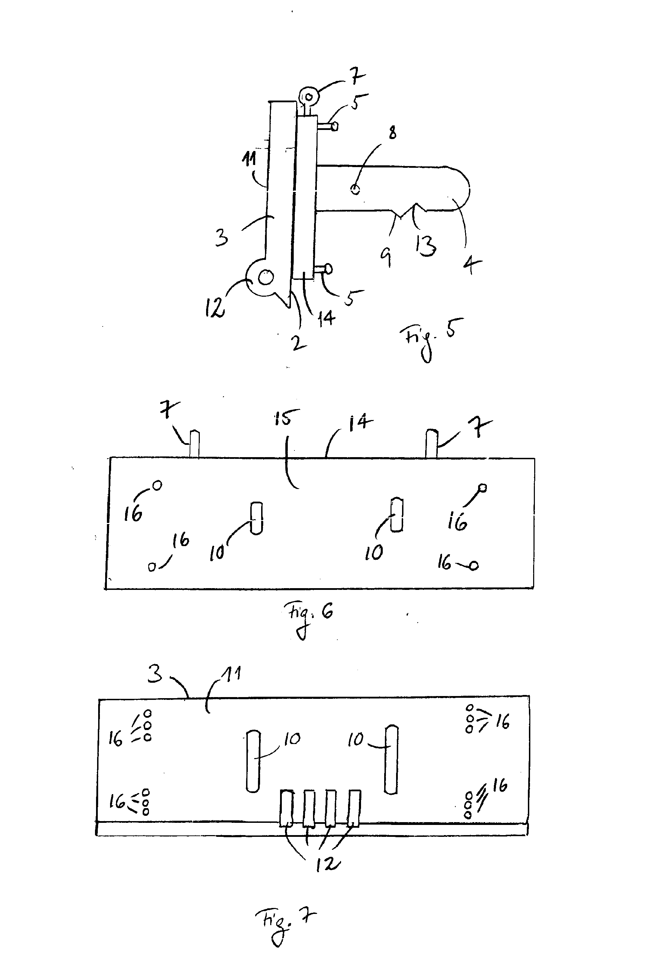

In Figur 5 ist ein Kupplungsadapter hier vorgeschlagener Art dargestellt, bei dem ein Kupplungsarm 4 über eine Zwischenplatte 14 mit einer Vorderseite 2 eines Basiselements 3 des Kupplungsadapters 1 verbunden ist. Eine dem Kupplungsarm 4 abgewandte Rückseite 15 der Zwischenplatte 14 ist in Figur 6 dargestellt. Zu erkennen sind zum einen Durchgangsöffnungen 10 zum Hindurchführen von Stützarmen eines Transportsystems. Außerdem sind Bohrungen 16 in der Zwischenplatte 14 zu erkennen zum Einführen von stiftförmigen oder bolzenförmigen Verbindungselementen (nicht dargestellt). In Figur 6 ist die Rückseite des in Figur 5 gezeigten Kupplungsadapters dargestellt. Zu erkennen sind Bohrungen 16, die mit den Bohrungen 16 der Zwischenplatte korrespondieren. Mittels stift- oder bolzenförmiger Verbindungselemente, lassen sich die Zwischenplatte 14 und das Basiselement 3 in drei Stufen höhenverstellbar miteinander verbinden.

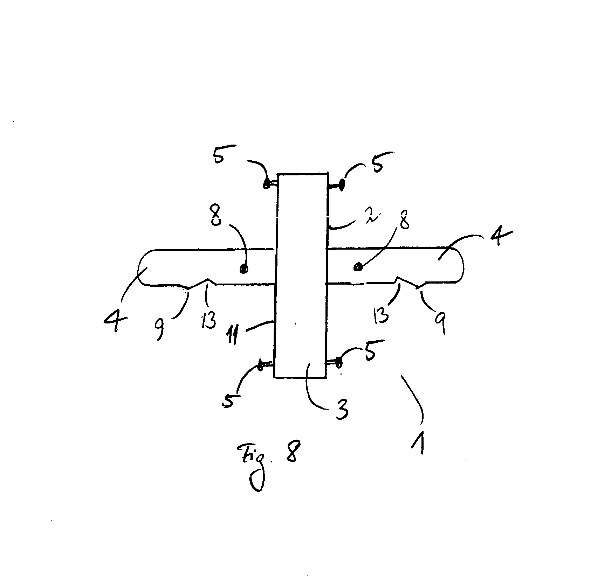

In Figur 8 ist ein Kupplungsadapter 1 hier vorgeschlagener Art dargestellt, bei dem an einer Vorderseite 2 eines Basiselements des Kupplungsadapters 1 ein erster Kupplungsarm 4 und an einer Rückseite 11 des Basiselements 3 ein zweiter Kupplungsarm 4 angeordnet ist. Dieser Kupplungsadapter ist geeignet zwei Transportsysteme miteinander zu verbinden, die jeweils ein Kupplungsmaul zum Aufnehmen eines der Kupplungsarme 4 aufweisen. Mittels Twistlockelementen 5 kann eine solche Kupplung der beiden Transportsysteme weiter stabilisiert werden.

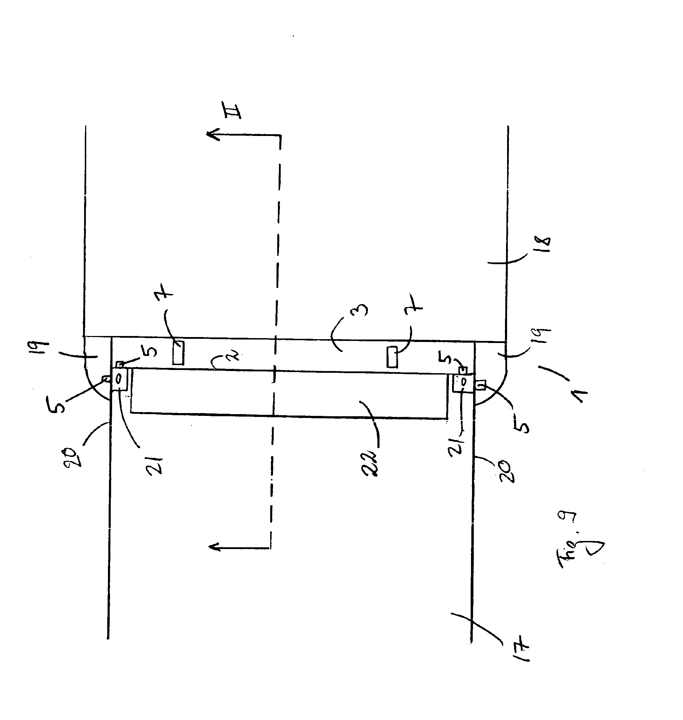

In Figur 9 ist eine Ladeplattform 17 gezeigt, die mit einem Fahrwerk 18 durch einen Kupplungsadapter 1 hier vorgeschlagener Art verbunden ist. Ein Basiselement 3 des Kupplungsadapters weist zwei Seitenarme 19 auf, welche mit Twistlockelementen ausgestattet sind. Die Seitenarme kontaktieren Seitenflächen 20 der Ladeplattform 19, die an Ecken der Ladeplattform Twistlockelemente 21 aufweist, die mit den Twistlockelementen 5 des Kupplungsadapters 5 (an den Seitenarmen 19 sowie an einer Vorderseite 2 des Basiselements 3) verbunden sind. Das Kupplungselement weist ferner an der Vorderseite 2 des Basiselements 3 eine Anpressplatte auf für eine Stabilisierung der Verbindung zwischen dem Kupplungsadapter 1 und der Ladeplattform 17, vgl. Figur 10.

Figur 10 zeigt einen Querschnitt (II) durch den in Figur 8 gezeigten Kupplungsadapter, das Fahrwerk 18 und die Ladeplattform 17 gemäß Figur 9. Zu erkennen sind insbesondere die Anpressplatte 22 des Kupplungsadapters 1, der mit einer Oberfläche 23 der Ladeplattform 17 in einem Berührungskontakt steht zur Kraftübertragung und Stabilisierung der Verbindung zwischen dem Kupplungsadapter 1 und der Ladeplattform 17. Gezeigt sind außerdem ein Kupplungsarm 4 des Kupplungsadapters 1, der in ein Kupplungsmaul 24 der Ladeplattform 17 eingeführt ist. Das Kupplungsmaul 24 und der Kupplungsarm weise miteinander korrespondierende Einbuchtungen 13, 25 und Ausbuchtungen 9, 26 zu Ausbildung einer formschlüssigen und somit besonders stabilen Verankerung des Kupplungsarms 4 in dem Kupplungsmaul 24.

Auf einer dem Kupplungsarm 4 abgewandten Rückseite 11 des Basiselements 3 weist der Kupplungsadapter 1 eine Bolzenlaschenkupplung 12 auf, die mit einer entsprechende Bolzenlaschenkupplung in dem Fahrwerk 18 verbunden ist, wobei zur Sicherung dieser Verbindung ein Kupplungsbolzen eingeführt ist

Figur 11 zeigt einen Querschnitt durch eine Ladeplattform 17, die mit zwei Kupplungsadaptern 1 hier vorgeschlagener Art verbunden sind. Hierzu sind zum einen Kupplungsarme 4 der beiden Kupplungsadapter 1 in jeweils ein Kupplungsmaul 24 der Ladeplattform 17 eingeführt. Zur Stabilisierung dieser Verbindungen sind Twistlockelemente 5 der Kupplungsadapter 1 mit Twistlockelementen 21 der Ladeplattform 17 verbunden. Außerdem weisen die Kupplungsadapter 1 jeweils eine Anpressplatte 22 auf zur Kraftübertragung auf eine Oberfläche 23 der Ladeplattform. An einer Oberseiten 6 von Basiselementen 3 der Kupplungsadapter 1 sind Schwerlastösen 7 angeordnet, durch welche jeweils ein Drahtseil 28 hindurchgeführt ist. Diese Drahtseile 28 sind außerdem mit Kranhaken 29 verbunden zum Anheben und Bewegen der Ladeplattform 17.

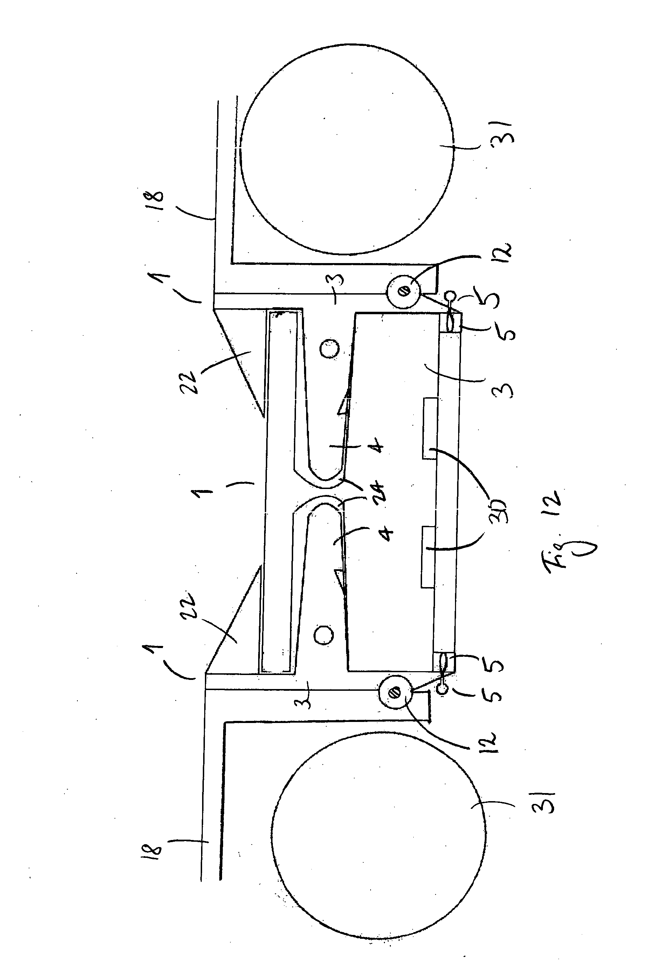

In Figur 12 ist ein Querschnitt durch zwei Fahrwerke 18 gezeigt, die miteinander gekuppelt sind durch drei miteinander verbundene Kupplungsadapter 1 hier vorgeschlagener Art. Die beiden äußeren Kupplungsadapter 1 weisen jeweils Bolzenlaschenkupplungen auf, über die sie jeweils mit einem der beiden Fahrwerke 18 verbunden sind, wie anhand Figuren 9 und 10 beschrieben. Der mittlere Kupplungsadapter 1 weist an zwei Kupplungsmäuler 24 auf, in die jeweils ein Kupplungsarm 4 der beiden äußeren Kupplungsadapter eingeführt sind. Die Verbindungen der beiden äußeren Kupplungsadapter 1 mit dem mittleren Kupplungsadapter werden stabilisiert durch Anpressplatten 22 der äußeren Kupplungsadapter 1 sowie durch Twistlockelemente 5.

Der mittlere Kupplungsadapter weist ferner Gabelstaplerschuhe auf zum Aufnehmen einer Gabel eines Gabelstaplers.

Zu erkennen ist ferner, dass eine Radachse 31 des rechten Fahrwerks angehoben ist zur Reduzierung der Anzahl von Radachsen mit Bodenkontakt. Auf diese Weise können Reibungsverluste reduziert werden zur Einsparung von Treibstoff.

### Bezugszeichenliste:

- 1.: Kupplungsadapter
- 2.: Vorderseite
- 3.: Basiselement
- 4.: Kupplungsarm
- 5.: Twistlockelement
- 6.: Oberseite
- 7.: Schwerlastöse
- 8.: Sicherungsbolzen
- 9.: Ausbuchtung an Kupplungsarm
- 10.: Durchgangsöffnung
- 11.: Rückseite
- 12.: Bolzenlaschenkupplung
- 13.: Einbuchtung an Kupplungsarm
- 14.: Zwischenplatte
- 15.: Rückseite einer Zwischenplatte
- 16.: Bohrung
- 17.: Ladeplattform
- 18.: Fahrwerk
- 19.: Seitenarm
- 20.: Seitenfläche einer Ladeplattform
- 21.: Twistlockelemente an Ladeplattform
- 22.: Anpressplatte
- 23.: Oberfläche einer Ladeplattform
- 24.: Kupplungsmaul
- 25.: Einbuchtung an einem Kupplungsmaul
- 26.: Ausbuchtung an einem Kupplungsmaul
- 27.: Kupplungsbolzen
- 28.: Drahtseil
- 29.: Haken eines Krans
- 30.: Gabelstaplerschuhe
- 31.: Radachse eines Fahrwerks

## Patentansprüche

1. Kupplungsadapter (1) zum Verbinden von Transportsystemen (17,18, 29) für schwere Lasten, **dadurch gekennzeichnet, dass** der Kupplungsadapter (1) ein Basiselement (3) mit einer Vorderseite (2) aufweist, an der mindestens eines der folgenden Kupplungselemente angeordnet ist:
- ein Kupplungsarm (4) zum Einführen in ein Kupplungsmaul (24),
- ein Kupplungsmaul (24) zum Aufnehmen eines Kupplungsarms (4),
und dass an mindestens einer weiteren Seite des Basiselements (3), insbesondere an einer der Vorderseite (2) abgewandten Rückseite (11) des Basiselements (2) oder an einer Oberseite (6) des Basiselements, mindestens eines der folgenden weiteren Kupplungselemente angeordnet ist:
- ein weiterer Kupplungsarm (4) zum Einführen in ein Kupplungsmaul (24),
- ein weiteres Kupplungsmaul (24) zum Aufnehmen eines Kupplungsarms (4),
- eine Bolzenlaschenkupplung (12),
- eine Schwerlastöse bzw. ein Schwerlasthaken (7) und/oder ein
- Twistlockelement.

2. Kupplungsadapter (1) aus Anspruch 1, **dadurch gekennzeichnet, dass** das Basiselement (3) mindestens einen Seitenarm (18) aufweist zum Kontaktieren von Seitenflächen (20) eines mit dem Kupplungsadapter verbundenen Transportsystems (17, 18, 29), insbesondere einer Ladeplattform (17).

3. Kupplungsadapter (1) nach Anspruch 2, **dadurch gekennzeichnet, dass** an den Seitenarmen (19) Twistlockelemente (5) angeordnet sind.

4. Kupplungsadapter (1) nach einem der vorangehenden Ansprüche, **dadurch gekennzeichnet, dass** das Basiselement (3) mindestens eine Durchgangsöffnung (10) aufweist, welche das Basiselement (3) von der Vorderseite (2) bis zur Rückseite (11) durchläuft, zum Hindurchführen eins Stützarms einer Ladeplattform (17) durch die Durchgangsöffnung (10).

5. Kupplungsadapter (1) nach einem der vorangehenden Ansprüche, **dadurch gekennzeichnet, dass** das Basiselement (3) einen Kupplungsarm (4) aufweist, der höhenverstellbar an dem Basiselement (3) befestigt ist.

6. Kupplungsadapter (1) nach einem der vorangehenden Ansprüche, **dadurch gekennzeichnet, dass** eine Zwischenplatte (14) vorgesehen ist mit einer den Kupplungsarm (4) tragenden Vorderseite und einer der ersten Seite abgewandten Rückseite (15), welche über Verbindungselemente (16) mit der Vorderseite (2) des Basiselements (3) höhenverstellbar verbunden ist.

7. Kupplungsadapter(1) nach einem der vorangehenden Ansprüche, **dadurch gekennzeichnet, dass**, falls kein Kupplungsmaul (24) vorgesehen ist, eine Länge des Basiselements (3) zwischen etwa 5cm und 50cm beträgt, und falls zwei Kupplungsmäuler (24) vorgesehen sind, die Länge des Basiselements (3) zwischen etwa 0,8m und 2m beträgt.

8. Kupplungsadapter (1) nach einem der vorangehenden Ansprüche, **dadurch gekennzeichnet, dass** eine Breite der Vorderseite (2) des Basiselements (3) und/oder eine Breite der Rückseite (11) des Basiselements in einem Bereich zwischen 1,5m und 2,8m liegt.

9. Kupplungsadapter (1) nach einem der vorangehenden Ansprüche, **dadurch gekennzeichnet, dass** ein Kupplungsarm (4) eine Länge in einem Bereich zwischen etwa 0,3 m bis 1,0 m aufweist oder dass ein Kupplungsmaul (24) eine Tiefe in einem Bereich zwischen etwa 0,3 m bis 1,0 m aufweist.

10. Kupplungsadapter (1) nach einem der vorangehenden Ansprüche, **dadurch gekennzeichnet, dass** an der Vorderseite (2) und/oder an der Rückseite (11) des Basiselements (3) Twistlockelemente (5) angeordnet sind.

11. Kupplungsadapter (1) nach einem der vorangehenden Ansprüche, **dadurch gekennzeichnet, dass** das der Kupplungsadapter (19) einen Kupplungsarm (4) aufweist, an dem mindestens ein ausfahrbarer Sicherungsbolzen (8) angeordnet ist zum Sichern oder Verriegeln des Kupplungsarms (4) innerhalb eines Kupplungsmauls (24).

12. Kupplungsadapter (1) nach einem der vorangehenden Ansprüche, **dadurch gekennzeichnet, dass** der Kupplungsadapter (1) einen Kupplungsarm (24) aufweist, an dem mindestens eine Ausbuchtung (9) oder mindestens eine Einbuchtung (25) angeordnet ist zum Sichern des Kupplungsarms (4) innerhalb eines Kupplungsmauls (24).
